(19) Europäisches Patentamt

European Patent Office

Office européen des brevets

(11) **EP 1 690 627 A2**

(12) **EUROPEAN PATENT APPLICATION**

(43) Date of publication:
**16.08.2006 Bulletin 2006/33**

(51) Int Cl.:
***B23K 20/10*** (2006.01)

(21) Application number: **06250697.7**

(22) Date of filing: **09.02.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **11.02.2005 US 652104 P**

(71) Applicant: **Nitinol Development Corporation
Fremont,
California 94539 (US)**

(72) Inventors:
• **London, Blair D.
San Luis Obispo, CA 93401 (US)**
• **Mahoney, Murray
Camarillo, CA 93010 (US)**
• **Pelton, Alan
Fremont, CA 94536 (US)**

(74) Representative: **Belcher, Simon James
Urquhart-Dykes & Lord LLP
Tower North Central
Merrion Way
Leeds LS2 8PA (GB)**

(54) **The use of friction stir processing and friction stir welding for nitinol medical devices**

(57) Metallic materials may be joined utilizing a friction stir processing technique. The friction stir processing technique utilizes a shaped, rotating tool to move material from one side of the joint to be welded to the other without liquefying the base material.

In one embodiment, a method of welding nickel-titanium alloys is disclosed which comprises: positioning a rotating tool in the joint between a first material and a second material; rotating the tool at a predetermined velocity to move the material from one side of the joint to the other side of the joint; and moving the rotating tool from one end of the joint to the other end of the joint.

Figure 1: Schematic of the friction stir welding process

**EP 1 690 627 A2**

**Description**

The present invention relates to the manufacture of medical devices, and more particularly, to the use of friction stir welding and friction stir processing of nickel-titanium alloys for use in the fabrication of medical devices and components.

Nickel-titanium alloys may be utilized in the fabrication of any number of medical devices such as stents, vena cava filters, distal protection devices, occluders and catheters. These medical devices are typically machined from seamless microtubing. The raw material that will ultimately yield a desired small diameter, thin-walled tube appropriate for the fabrication of the above-described devices, is a modestly sized round bar (e.g. 25.4 mm (one inch) in diameter round bar stock) of predetermined length. In order to facilitate the reduction of the initial bar stock into a much smaller tubing configuration, an initial clearance hole must be placed into the bar stock that runs the length of the bar stock. These tube hollows, i.e. heavy walled tubes, may be created by "gun-drilling," i.e. high depth to diameter ratio drilling, the bar stock. Typically, the tubing is manufactured from bars on the order of ten mm to thirty mm that are gun drilled to create the longitudinal hole. These tube hollows are then drawn to the final size. The outside dimension, the wall thickness and the inside dimension are dictated by the sequence of drawing steps and choice of mandrels. The tubing may also be subjected to a number of "hot" and/or "cold" working steps to achieve particular properties for the tubing. It is important to note that other industrially relevant methods of creating the tube hollows from bar stock may be utilized by those skilled in the art of tubing manufacture.

An alternate approach to the manufacture of tubing involves starting from sheet or other flat raw material products. In starting with a sheet of material, the manufacturing process is greatly simplified. Typically, the raw material sheet is formed into cylindrical structures and joined by any number of known welding techniques. This method has been tried, and documented by Horikawa et al. (SMST-94, 347-352, 1994), on a 0.4 mm thick nickel-titanium sheet. The sheet was electron beam welded and subsequently hot worked and cold worked to 1.0 mm and 0.5 mm outer diameters. What was observed was that the welded tubes often broke during cold drawing and had non-uniform inner surfaces. Although not mentioned in the Horikawa et al. paper, the breaks during manufacture were likely due to the properties of the weld zone common to welding techniques that melt the base material. Such fusion welding techniques or methods, for example, electron beam, inert gas and laser, are known for creating weld zone microstructures that are significantly different from the base material and consequently the weld zone has inferior mechanical properties relative to the remainder of the tubing that limit the usefulness of the end product. Furthermore, welding dissimilar materials such as nickel-titanium alloys and stainless steel by fusion methods leads to the formation of brittle intermetallic compounds in the weld zone.

Accordingly, there exists a need for welding technique that avoids the problems described herein.

The present invention overcomes the disadvantages associated with currently utilized welding techniques as briefly described above.

In accordance with one embodiment, the present is directed to a method of welding nickel-titanium alloys. The method comprises positioning a rotating tool in the joint between a first material and a second material, rotating the tool at a predetermined velocity to move the material from one side of the joint to the other side of the joint, and moving the rotating tool from one end of the joint to the other end of the joint.

In accordance with another embodiment, the present invention is directed to a method of modifying the surface of a nickel-titanium alloy. The method comprises plunging a rotating tool into the surface of a metallic material to a predetermined depth, rotating the tool at a predetermined velocity to manipulate the microstructure of the metallic material, and moving the rotating tool along the surface of the metallic material.

The process of friction stir welding of the present invention relies not on the melting of material, but rather on the transfer of material from one side of a joint to the other side of the joint. The speed of rotation and the design of the friction stir welding tool determines the speed and amount of material transferred. Without melting the base material, none of the negative effects associated with currently utilized welding techniques are manifested in the final work product.

Friction stir welding is a process wherein a rotating tool is positioned in the joint between two pieces of material that are to be joined together and moved along the joint while rotating at a predetermined velocity. The design of the tool and the rotation thereof causes the transfer of material from one side of the joint to the other side of the joint, thereby effectively welding the two pieces of material together. As this is substantially a "cold" weld, there are no deleterious effects on the base material caused by heating associated with currently utilized welding techniques.

Although this process may be utilized in welding any number of metallic materials together, it is particularly advantageous in the welding of nickel-titanium alloys. For example, one product that may be manufactured by friction stir welding is nickel-titanium microtubing, which could then be further processed into final dimensions for any number of medical devices as briefly described above. The friction stir welded tubing may be utilized as microcatheters or as a starting material for any number of medical devices including stents, distal protection filters, vena cava filters, occluders and anastomotic devices. Friction stir welding may also be utilized to weld nickel-titanium alloys with other medical grade engineering materials, such as stainless steel, titanium alloys (alpha, beta and alpha + beta), cobalt-based alloys (L605) and refractory metal alloys. This technique may also be utilized to join or otherwise secure more highly radiopaque materials to nickel-titanium alloys, including gold, platinum, palladium, silver, tantalum, tungsten and molybdenum. By joining or welding these more highly radiopaque materials to the nickel-titanium alloys, the entire device or desired regions of the device become more radiopaque. Accordingly, bands of tantalum, for example, may be welded to the ends of a nickel-titanium stent so that positioning under x-ray fluoroscopy may be more easily achieved.

Friction stir processing is related to friction stir welding. It involves utilizing the friction stir tool to process this surface of a material or component without a weld joint being created. The surface microstructure may be substantially altered, for example, a refined grain size, by the heat and plastic deformation of friction stir processing. The heat generated by friction stir welding and friction stir processing is significantly lower than the heat of traditional welding techniques. Greatly improved material properties have been achieved in aluminum, copper-based alloys and iron-based alloys with friction stir processing.

Friction stir welding and friction stir processing offer new opportunities in the manufacture nickel-titanium medical devices and components. These techniques allow solid-state joining or solid-state surface processing to obtain optimized forms or optimized properties that are not available otherwise. Traditional fusion welding methods dramatically alter the microstructure of nickel-titanium that, at least degrades the shape memory or superelastic properties, and at worst, creates a weld zone containing intermetallics (e.g., $Ti_2Ni$), which render the material brittle and therefore unusable. Friction stir processing also allows surface processing of the material to, for example, create a more wear resistant surface layer. This feature may be extremely important for applications subjected to fretting or fretting-corrosion environments.

Friction stir processing and friction stir welding are related solid-state techniques that make use of plastically deforming and mixing material(s) on a very localized scale without creating solidification structures such as intermetallics and artifacts such as voids. These methods may be used for a wide range of medical devices based on nickel-titanium, stainless steel, titanium alloys, cobalt alloys, and other materials. Furthermore, these techniques may be used in the formation of the tubing or flat-stock forms (sheet, strip) that are eventually used to manufacture medical devices. Alternatively, it is envisioned that these techniques may also be used on the finished or semi-finished devices to provide unique characteristics, such as joining a nickel-titanium device to a dissimilar component.

Friction stir welding allows for the continuous joining of materials in the solid state, i.e., without melting and re-solidification occurring in the weld zone. This solid-state welding technique employs a non-consumable rotating tool with superior high-temperature properties as compared to those of the material or materials to be joined. Any number of suitable materials may be utilized in the fabrication of the rotating tool, including polycrystalline cubic boron nitride (PCBN) and tungsten-rhenium (W-Re). The selection of tool material depends on the materials to be joined. The tool may comprise any suitable shape depending on the application.

The rotating tool is similar to the tool bit utilized with a router or shaper. In the exemplary embodiment described herein, the rotating tool is placed in the chock of a milling machine so that it may be rotated at a predetermined rotational velocity, plunged into the joint between the materials to be joined and held at this predetermined depth, and moved along the joint to complete the weld. As briefly described above, the speed of rotation and the shape of the tool cause the material from one side of the joint to move to the other side of the joint thereby resulting in a welded joint. The direction of tool rotation determines the direction of material movement. Essentially, material from both sides of the joint is moved by the rotating tool. The speed of rotation also factors into the rate of material movement. The speed of rotation may be in the range from about 200 rpm to about 2000 rpm, and preferably in the range from about 400 rpm to about 800 rpm.

Embodiments of the invention will now be described by way of example with reference to the accompanying drawings, in which:

Figure 1 is a diagrammatic representation of the friction stir welding process in accordance with the present invention; and

Figure 2 illustrates the surface of a friction stir processed nickel-titanium sheet in accordance with the present invention.

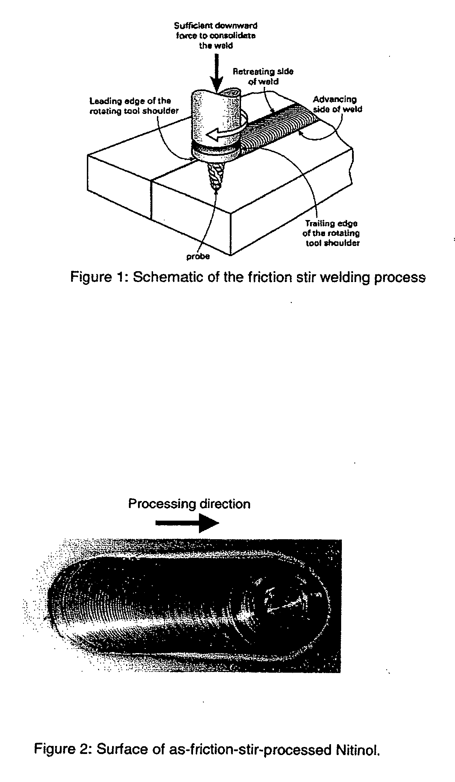

Referring to Figure 1, there is illustrated, in schematic form, the rotating tool 100 in the joint 250 between two work piece materials 200 and 300. In a typical butt joint configuration with the two work piece materials 200 and 300 rigidly clamped, the rotating tool 100 is plunged into the joint 250 until the tool 100 is at a sufficient depth to transfer material through the depth of the entire joint. The tool 100 comprises a pin or probe section 102 that allows the tool 100 to be plunged into the joint 250, and a shaped shoulder portion 104 that provides for the transfer of material from one side of the joint 250 to the other side of the joint 250. There is a transition region, not illustrated, between the probe 102 and the shoulder 104. The shape of the tool 100 is designed to move the material. As is illustrated, in the exemplary embodiment, the tool 100 has a substantially cylindrical shape.

Once the tool 100 is positioned in the joint 250, the tool 100 is traversed along the joint 250. The plastic deformation caused by the shoulder 104 and the probe 102 along with the frictional effects heat the material near the joint 250 interface causing material flow on both sides of the joint as illustrated. With this process, a metallurgically sound joint between the two materials 200 and 300 is created. In Figure 1, arrow 106 illustrates the direction of rotation of the tool 100 with the leading edge 108 of the rotating tool shoulder 104 and the trailing edge 110 of the rotating tool shoulder 104. Based upon the direction of rotation, there is a retreating side of the weld 112 at an advancing side of the weld 114.

Referring now to Figure 2, there is illustrated the results of friction stir processing. In friction stir welding, the tool 100 illustrated in Figure 1 is plunged into the joint between the pieces to be joined. In friction stir processing, the tool 100 is only in contact with the surface of the material. The depth of penetration depends on the characteristics to be achieved. As described above, the tool 100 may be utilized to modify the surface microstructure of the material, thereby causing a substantial modification to the finished device. For example, by utilizing friction stir processing, the microstructure may be designed such that medical devices such as stents may be designed with a wide range of geometries that are adaptable to various loading conditions. In other words, by altering the microstructure, for example, grain size, the strength of the device or component may be altered. Essentially, the causal relationship between material structure, in this instance, grain size, and the measurable strength, in this instance yield strength, is explained by the classic Hall-Petch relationship where strength is inversely proportional to the square root of grain size as given by

$$\sigma_y \propto \frac{1}{\sqrt{G.S.}}$$

wherein $\sigma_y$ is the yield strength as measured in MPa and G.S. is grain size is measured in millimeters as the average granular diameter.

## Claims

1. A method of welding nickel-titanium alloys comprising:

    positioning a rotating tool in the joint between a first material and a second material;
    rotating the tool at a predetermined velocity to move the material from one side of the joint to the other side of the joint; and
    moving the rotating tool from one end of the joint to the other end of the joint.

2. A method of modifying the surface of a nickel-titanium alloy comprising;

    plunging a rotating tool into the surface of a metallic material to a predetermined depth;
rotating the tool at a predetermined velocity to manipulate the microstructure of the metallic material; and
moving the rotating tool along the surface of the metallic material.

Figure 1: Schematic of the friction stir welding process

Figure 2: Surface of as-friction-stir-processed Nitinol.

5